# EUROPEAN PATENT APPLICATION

(11) **EP 4 606 666 A1**
(43) Date of publication of application: **27.08.2025**
(21) Application number: 25154835.0
(22) Date of filing: 29.01.2025
(51) Int. Cl.: B60W 30/06, B62D 15/02

(54) **VEHICLE CONTROL APPARATUS, VEHICLE CONTROL METHOD, AND NON-TRANSITORY STORAGE MEDIUM STORING PROGRAM THEREOF**

(30) Priority: 06.02.2024 JP 2024016263
(71) Applicant: TOYOTA JIDOSHA KABUSHIKI KAISHA, Toyota-shi Aichi 471-8571 (JP)
(72) Inventor: NEMOTO, Kazuki, Toyota-shi, Aichi, 471-8571 (JP)
(74) Representative: Cabinet Beau de Loménie

(57) **Abstract**

A vehicle control apparatus comprises a controller (20,30) configured to be capable of: performing an automatic parking to move and park a vehicle into a registered target parking space corresponding to a registered parking position that has been registered in advance from a position in the vicinity of the registered target parking space; and performing an autonomous driving to autonomously move the vehicle to a destination. The controller (20,30) is configured to, when the destination coincides with a position that is the same as the registered parking position, directly switch a driving state of the vehicle to a state where the automatic parking is executed from a state where the autonomous driving is being executed without handing over the driving state of the vehicle to a user of the vehicle, to park the vehicle into the registered target parking space by the automatic parking.

## Description

### TECHNICAL FIELD

The present disclosure relates to a vehicle control apparatus, a vehicle control method, and a non-transitory storage medium storing a program thereof, for autonomously driving a vehicle to a destination and for automatically parking the vehicle into a pre-registered target parking position.

### BACKGROUND

The autonomous driving is a technology that autonomously drives a vehicle to a destination position (or a destination) from a starting position (or starting point). One of conventional apparatuses that perform the autonomous driving moves a position of a steering wheel to an appropriate position in accordance with an autonomous driving level.

According to this conventional apparatus, a user can easily respond to "a steering wheel hold requirement (i.e., a hands-on requirement) to the user, a take-over requirement, or the like" generated during the autonomous driving (refer to Japanese Patent Application Laid-Open No. 2019-142337).

In addition to the autonomous driving, an automatic parking technology (i.e., an automatic parking control, or an automatic parking) has been developed. In the automatic parking control, a target parking space is registered in advance, and the vehicle is automatically moved and parked to the registered target parking space from a position (i.e., a parking start position) near the target parking space (refer to Japanese Patent No. 7176421, and Japanese Patent Application Laid-Open No. 2023-176547).

A vehicle user sometimes wants/desires to move his/her vehicle to a position near the destination by the autonomous driving, and thereafter, park it into the target parking space by the automatic parking. In this case, the conventional technology hands over driving of the vehicle to the user when the vehicle reaches the destination, and then, lets the user perform a predetermined operation to start the automatic parking so as to start the automatic parking. Therefore, before the user parks the vehicle by the automatic parking, he/she needs to hold the steering wheel and/or steer the steering wheel. The user sometimes finds such operations burdensome. The present disclosure is made to cope with problem.

### SUMMARY

At least one of embodiments of a vehicle control apparatus according to present disclosure comprises a controller configured to be capable of:
performing an automatic parking to move and park a vehicle into a registered target parking space corresponding to a registered parking position that has been registered in advance, from a position in the vicinity of the registered target parking space; and
performing an autonomous driving to autonomously move the vehicle to a destination.

The controller is configured to, when the destination coincides with the registered parking position directly switch a driving state of the vehicle to a state where the automatic parking is executed from a state where the autonomous driving is being executed without handing over the driving state of the vehicle to a user of the vehicle, to park the vehicle into the registered target parking space by the automatic parking.

According to the above embodiment, the user of the vehicle can park the vehicle, which has been being traveled by the autonomous driving, into the registered target parking space by the automatic parking, without intervening manually driving the vehicle between the autonomous driving and the automatic parking. This enables the user to easily move the vehicle to the destination and easily park the vehicle to the registered parking space.

In at least one of embodiments according to the present disclosure, the controller is configured to, when the vehicle has moved, by the autonomous driving, to an area from which the vehicle can be moved and parked into the registered target parking space by the automatic parking, switch the driving state of the vehicle to the state where the automatic parking is executed from the state where the autonomous driving is being executed.

In at least one of embodiments according to the present disclosure, the controller is configured to:
let the user select either one of parking the vehicle into the registered target parking space by the automatic parking and handing over the driving state of the vehicle to the user, after the vehicle has reached a predetermined area determined based on the registered parking position by the autonomous driving in a case where the destination coincides with the registered parking position;
directly switch the driving state of the vehicle to the state where the automatic parking is executed from the state where the autonomous driving is being executed, when parking the vehicle into the registered target parking space by the automatic parking is selected; and
switch the driving state of the vehicle to a state where the vehicle is manually operated by the user from the state where the autonomous driving is being executed, when handing over the driving state of the vehicle to the user is selected.

According to the above embodiment, the user can directly change the driving state of the vehicle to the state where the automatic parking is executed from the state where the autonomous driving is being executed, or the user can change the driving state of the vehicle to the state where the vehicle is manually operated by the user from the state where the autonomous driving is being executed, in accordance with his/her desire.

In at least one of embodiments according to the present disclosure, the controller is configured to set an area within a predetermined distance from the registered parking position, as the predetermined area determined based on the registered parking position.

The above embodiment is able to let the user select either one of the automatic driving and the handover, before a time point at which the vehicle enters into a state where the vehicle can be parked into the registered target parking space by the automatic parking.

In the above embodiments, the controller may be configured to set an area from which the vehicle can be moved and parked into the registered target parking space by the automatic parking, as the predetermined area determined based on the registered parking position.

According to the above embodiment, when the user desires to directly switch the driving state of the vehicle to the state where automatic parking is executed from the state where the autonomous driving is being executed, the user can immediately let the vehicle start to be moved by the automatic parking.

In the above embodiments, the controller may be configured to:
when the destination is set by the user,
   determine whether or not the destination coincides with the registered parking position, and let the user select in advance either one of parking the vehicle into the registered target parking space by the automatic parking and handing over the driving state of the vehicle to the user when it is determined that the destination coincide with the registered parking position;
after the vehicle has reached a predetermined area determined based on the registered parking position by the autonomous driving;
   directly switch the driving state of the vehicle to the state where the automatic parking is executed from the state where the autonomous driving is being executed, when parking the vehicle into the registered target parking space by the automatic parking has been selected; and
   switch the driving state of the vehicle to a state where the vehicle is manually operated by the user from the state where the autonomous driving is being executed, when handing over the driving state of the vehicle to the user has been selected.

According to this embodiment, when the user sets the destination of the autonomous driving, the user can decide/select whether or not the vehicle will be parked by the automatic parking eventually. Therefore, it is not necessary for the user to perform an operation to switch the driving state of the vehicle to the automatic parking while the vehicle is being traveled by the autonomous driving. This enables the user to easily move the vehicle to the destination and easily park the vehicle to the registered parking space.

In the above embodiments, the controller may be configured to make a notification to the user that the driving state of the vehicle is going to be changed to the state where the automatic parking is executed, before the driving state of the vehicle is directly switched to the state where the automatic parking is executed from the state where the autonomous driving is being executed.

According to this embodiment, the user can recognize in advance that the driving state will be changed to the state where the vehicle is parked by the automatic parking from the state where the vehicle is being traveled by the autonomous driving.

In the above embodiments, the controller may be configured to;
when making the notification, make a suggestion to ask whether or not the user wants the driving state of the vehicle to be handed over to the user instead of parking the vehicle into the registered target parking space; and
when the user wants the driving state of the vehicle to be handed over to the user, switch the driving state of the vehicle to the state where the vehicle is manually operated by the user from the state where the autonomous driving is being executed.

According to this embodiment, if the user no longer desires to park the vehicle by the automatic parking in a period from a time point at which the user set the destination and a time point at which the vehicle reaches in the vicinity of the destination, the user can start manually driving the vehicle before the vehicle starts to be parked by the automatic parking.

In the above embodiments, the controller may be configured to make the notification, when the vehicle has reached the predetermined area. In this case, the controller may set an area within a predetermined distance from the registered parking position, as the predetermined area. Alternatively, the controller may set an area from which the vehicle can be moved and parked into the registered target parking space by the automatic parking, as the predetermined area.

Notably, in the above description, in order to facilitate understanding of the present disclosure, the constituent elements corresponding to those of embodiments which will be described later are accompanied by parenthesized symbols and/or names which are used in the embodiments; however, the constituent elements of the disclosure are not limited to those in the embodiments defined by the symbols and/or names. The present disclosure covers a vehicle control method, and a non-transitory storage medium storing a program thereof.

### BRIEF DESCRIPTION OF THE DRAWINGS

FIG. 1 is a schematic diagram of a vehicle control apparatus according to a first embodiment of the present disclosure.
FIG. 2 is a routine executed by a CPU of the autonomous driving ECU shown in FIG. 1.
FIG. 3 is a routine executed by the CPU of the autonomous driving ECU shown in FIG. 1.
FIG. 4 shows a screen displayed on the display shown in FIG. 1.
FIG. 5 shows a routine executed by a CPU of an autonomous driving ECU according to a modified example of the first embodiment of the present disclosure.
FIG. 6 is a routine executed by a CPU of an autonomous driving ECU according to a second embodiment of the present disclosure.
FIG. 7 shows a screen displayed on the display shown in FIG. 1.
FIG. 8 is a routine executed by the CPU of the autonomous driving ECU according to the second embodiment of the present disclosure.
FIG. 9 shows a screen displayed on the display shown in FIG. 1.
FIG. 10 is a routine executed by a CPU of an autonomous driving ECU according to a third embodiment of the present disclosure.

### DETAILED DESCRIPTION

### 1. First embodiment

### <Configuration>

A vehicle control apparatus (hereinafter, referred to as a "first apparatus") according to a first embodiment of the present disclosure is applied to and/or is mounted on an unillustrated vehicle. The vehicle which the first apparatus is applied to may be one of a vehicle having an internal combustion engine as a drive source, a vehicle having an electric motor as a drive source (namely, an electric vehicle), and a hybrid vehicle.

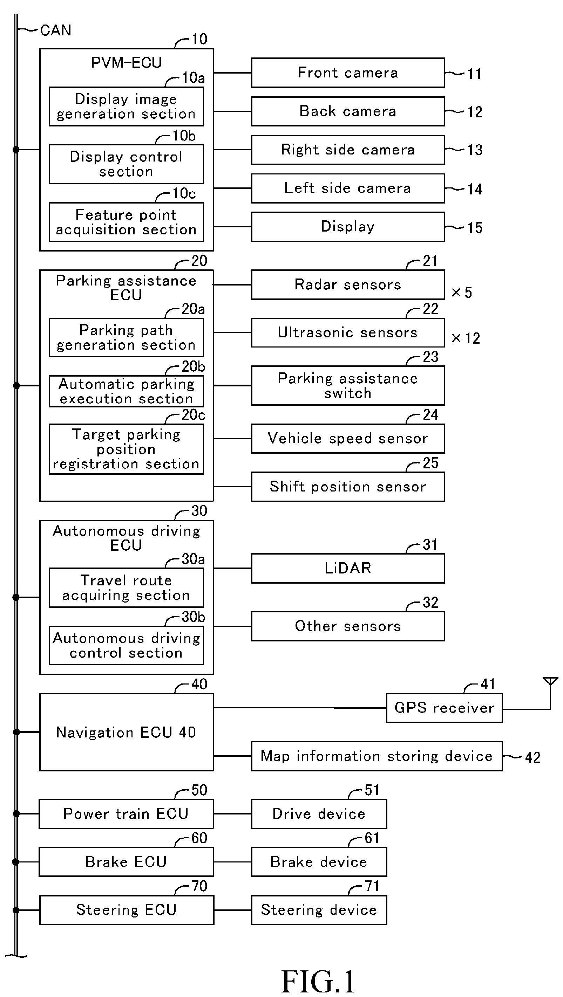

As shown in FIG. 1, the first apparatus comprises a PVM-ECU 10, a parking assistance ECU 20, an autonomous driving ECU 30, a navigation ECU 40, a power train ECU 50, a brake ECU 60, and a steering ECU 70.

In the present specification, an "ECU" means an electronic control device/unit (i.e., a control unit), that includes a microcomputer. The microcomputer includes a CPU (a processor), a ROM, a RAM, a data writable involatile memory, and an interface (an I/F). The ECU may sometimes be referred to as a "controller" or a "computer". A plurality of the above-described ECUs are connected to each other through Controller Area Network (CAN) in such a manner that they can exchange information with each other. Therefore, one of the ECUs can obtain signals or information of devices, such as a sensor, a camera, and a switch, which are connected to another ECU, through the CAN. Some or all of the ECUs may be integrated into a single ECU. In addition, one of the ECUs may be implemented by a plurality of ECUs.

The PVM-ECU 10 is connected with a front camera 11, a back camera 12, a right side camera 13, a left side camera 14, and a touch panel display 15 that can display touch buttons.

Each of the cameras 11-14 comprises a wide-angle lens.

The front camera 11 takes a picture of a front scene of the vehicle to produce a front wide angle image data.

The back camera 12 takes a picture of a rear scene of the vehicle to produce a rear wide angle image data.

The right side camera 13 takes a picture of a rightward scene of the vehicle to produce a rightward wide angle image data.

The left side camera 14 takes a picture of a leftward scene of the vehicle to produce a leftward wide angle image data.

The PVM-ECU 10 comprises a display image generation section 10a, a display control section 10b, and a feature point acquisition section 10c, as its functions.

The display image generation section 10a obtains the wide angle image data from the cameras 11-14, and generates a surrounding image showing a scene around the vehicle. The surrounding image includes a bird's eye view image of the vehicle and a traveling direction image of the vehicle.

The display control section 10b causes the display 15 to display an image that includes the bird's eye view image and the traveling direction image of the vehicle.

The feature point acquisition section 10c detects/recognizes feature points included in the surrounding image by carrying out an image analysis process over the surrounding image, and groups the feature points for each of a set of patterns on the road surface and a set of demarcation lines on the road. In addition, the feature point acquisition section 10c obtains, as feature point information, a positional relationship between a shape of the grouped feature points and the vehicle, and stores the relationship in the involatile memory. The PVM-ECU 10 (i.e., the feature point acquisition section 10c) transmits the feature point information to the parking assistance ECU 20, every time a predetermined time elapses.

The parking assistance ECU 20 receives signals from a plurality (five) of radar sensors 21, a plurality (twelve) of ultrasonic sensors (sonars) 22, a parking assistance switch 23, a vehicle speed sensor 24, and shift position sensor 25.

The radar sensor 21 includes "a frontward radar sensor, a front leftward radar sensor, a front rightward radar sensor, a rear leftward radar sensor, and a rear rightward radar sensor" that are not illustrated. Each of the radar sensors obtains and outputs object information specifying a distance between the vehicle and an object located around the vehicle, a relative speed of the object, and an azimuth of the object, using electrical waves in a millimeter waveband.

The ultrasonic sensor 22 includes twelve of the ultrasonic sensors disposed at the peripheral of the vehicle. The ultrasonic sensor measures a distance between the vehicle and an object located around the vehicle, using ultrasonic waves.

The cameras 11-14, the radar sensor 21, and the ultrasonic sensor 22 are sensors to obtain information around the vehicle, and thus, are referred to as a vehicle surrounding sensor.

The parking assistance switch 23 is a switch operated by the user (driver) who wants to start or terminate the parking assistance control (i.e., the automatic parking). The vehicle speed sensor 23 detects a vehicle speed so as to output a signal indicative of the vehicle speed. The shift position sensor 25 detects a position of a shift lever so as to output a signal indicative of the position of the shift lever.

The parking assistance ECU 20 comprises a parking path generation section 20a, an automatic parking execution section 20b, and a target parking position registration section 20c, as its functions.

The parking path generation section 20a searches for a space into which the vehicle can be parked based on the information from the vehicle surrounding sensor when the parking assistance switch 23 is operated in a case where the vehicle speed is zero or a value near zero, and sets candidate target parking spaces within the spaces into which the vehicle can be parked. The parking path generation section 20a causes the display 15 to display an image in which the candidate target parking spaces are superimposed on the bird's eye view image and the traveling direction image through the PVM-ECU 10.

When one of the candidate target parking spaces is determined as a "parking space into which the vehicle should be parked by the automatic parking (i.e., as the target parking space)" by the operation to the display 15 by the user, the parking path generation section 20a generates a path, as the parking path, from the current position of the vehicle to the target parking space.

When the start button for the automatic parking displayed on the display 15 is operated in a state where the parking path has been generated, the automatic parking execution section 20b transmits instruction signals to the power train ECU 50, the brake ECU 60 and the steering ECU 70 so that the vehicle is automatically moved at a low speed along the parking path. The automatic parking control in accordance with the generated parking path as described above is sometimes referred to as a "normal automatic parking control", for convenience.

When the user operates the parking position registration button displayed on the display 15 after the vehicle state has changed from a moving state to a parking state (i.e., a state where the shift position is shifted to the parking (P) position), the target parking position registration section 20c obtains a current position (a latitude and a longitude) of the vehicle in the parked state from the navigation ECU 40 described later. The target parking position registration section 20c stores the obtained current position of the vehicle in the involatile memory of the parking assistance ECU 20, as a registered parking position.

At this time point, if the moving of the vehicle to the registered parking position has been controlled by the automatic parking, the target parking position registration section 20c stores the above-described feature point information obtained in a period from a time point at which the automatic parking start button is operated to a time point at which the parking position registration switch is operated in the involatile memory of the parking assistance ECU 20 while associating the feature point information with the registered parking position. It should be noted that, in this case, the feature point information is mapped on a 3D coordinate system with respect to the vehicle of when the vehicle is located at a place where the vehicle is parked at the registered parking position. The place of when the vehicle is parked at the registered parking position is referred to as a "registered target parking space", hereinafter. As a result, an occupying space of the vehicle that is parked at the registered parking position is stored as the registered target parking space in the involatile memory while being associated with the feature point information around the vehicle and the registered parking position. The feature point information that is obtained in a period from a time point at which the start button for the automatic parking is operated to a time point at which the parking position registration button is operated, and that is stored in the involatile memory of the parking assistance ECU 20 while being associated with the registered parking position is sometimes referred to as "registered feature point information", for convenience.

Furthermore, the target parking position registration section 20c can store the registered feature point information in the involatile memory of the parking assistance ECU 20 even when the user manually parks the vehicle. Specifically, the user operates a planned parking position registration button before starting the manual driving for parking. The user operates the parking position registration button after he/she manually parks the vehicle. The target parking position registration section 20c stores (registers) a position (latitude and longitude) of the vehicle of when the parking position registration button is operated, as the registered parking position, in the involatile memory of the parking assistance ECU 20. In addition, the target parking position registration section 20c stores the above-described feature point information obtained in a period from a time point at which the planned parking position registration button is operated to a time point at which the parking position registration button is operated, in the involatile memory of the parking assistance ECU 20 while associating the feature point information with the registered parking position. As a result, an occupying space of the vehicle that is parked at the registered parking position is stored as the registered target parking space in the involatile memory while being associated with the feature point information around the vehicle and the registered parking position.

When the user desires to park the vehicle into "the registered target parking space corresponding to the registered parking position" from a position near the registered parking position through the automatic parking after the registered parking position is registered, the user inputs an instruction indicating such user's desire using the display 15. When this instruction is input, the automatic parking execution section 20b performs a "parking assistance control after the registration of the registered parking position (i.e., an automatic parking into the registered target parking space)".

Specifically, the automatic parking execution section 20b obtains, as "actual feature point information", feature point information from the PVM-ECU 10, every time a predetermined time elapses. The automatic parking execution section 20b determines whether or not the actual feature point information includes a grouped feature points that can be regarded as identical to the grouped feature points included in the registered feature point information. When the automatic parking execution section 20b determines that the actual feature point information includes the grouped feature points that can be regarded as identical to the grouped feature points included in the registered feature point information, it starts the automatic parking to automatically park the vehicle into the registered target parking space when the user inputs information indicating that the user wants to automatically park the vehicle into the registered target parking space. In the automatic parking into the registered target parking space, the automatic parking execution section 20b moves the vehicle to the registered target parking space by letting the vehicle travel in such a manner that a "positional relationship between the vehicle and the grouped feature points" represented by the actual feature point information coincides with a "positional relationship between the vehicle and the grouped feature points" represented by the registered feature point information. In this case as well, the automatic parking execution section 20b transmits instruction signals to the power train ECU 50, the brake ECU 60, and the steering ECU 70.

The above-described "parking assistance control after the registration of the registered parking position" that does not include generating the parking path is sometimes referred to as a "path memorized type automatic parking control", for convenience. The path memorized type automatic parking control is also known, and is disclosed in Japanese Patent 7176421 and Japanese Patent Application Laid-Open No. 2023-176547.

It should be noted that the parking assistance control after the registration of the registered parking position can be executed by the normal automatic parking control. In this case, the parking path generation section 20a obtains a positional relationship between the registered target parking space and a current position of the vehicle by comparing the registered feature point information and the actual feature point information. The parking path generation section 20a generates the above-described parking path based on the obtained positional relationship. The automatic parking execution section 20b lets the vehicle move along the parking path so as to park the vehicle into the registered target parking space. Hereinafter, the "automatic parking" includes both of parking the vehicle by the normal automatic parking control and parking the vehicle by the path memorized type automatic parking control.

The autonomous driving ECU 30 receives signals from a LiDAR 31 and other sensors 32. LiDAR 31 scans a laser beam and irradiates an object with the laser beam, and receives a laser beam reflected at the object. The LiDAR 31 measures a time from a time point at which the laser beam starts to be radiated to a time point at which the reflected beam is received so as to obtain information on a position of the object and a distance to the object.

The other sensors 32 includes a driving operation amount sensor that detects an operation amount of an operation element of the vehicle (e.g., an acceleration pedal, a brake pedal, a steering wheel, or the like), and a sensor which detects a traveling state of the vehicle (e.g., an acceleration sensor, a yaw rate sensor, or the like).

The autonomous driving ECU 30 comprises a travel route acquiring section 30a, and an autonomous driving control section 30b, as its functions.

The travel route acquiring section 30a obtains a planned travel route along which the vehicle is supposed to travel by the autonomous driving, from a navigation ECU 40 described later. The travel route acquiring section 30a may obtain the planned travel route from an unillustrated exterior device (e.g., a server) using a communication device which communicates with the exterior device.

The autonomous driving control section 30b performs the autonomous driving to let the vehicle autonomously travel along the travel route, based on signals from the LiDAR 31, the above-described vehicle surrounding sensor, and "the current position of the vehicle and the map information" obtained through the navigation ECU 40 described later. In this case, the autonomous driving control section 30b transmits instruction signals to the power train ECU 50, the brake ECU 60, and the steering ECU 70 to control the driving state of the vehicle.

The navigation ECU 40 is connected with a GPS receiver 41 and a map information storing device 42. The navigation ECU 40, the GPS receiver 41, and the map information storing device 42 constitute an on-board navigation system together with the display 15. The navigation ECU 40 obtains the "current position of the vehicle" represented by a latitude and a longitude, based on the GPS signals (i.e., signals from positioning satellites) received by the GPS receiver 41. The navigation ECU 40 produces/generates a recommended route(s) from the current position of the vehicle to the destination that is set/input through the display 15 by the user, based on the map information stored in the map information storing device 42. The navigation ECU 40 selects and sets one of the recommended routes as the travel route (the planed travel route) in response to an instruction from the user. When the manual driving is selected by the user, the navigation ECU 40 executes a well-known route guidance. When the autonomous driving is selected by the user, the navigation ECU 40 transmits information including the current position of the vehicle, the travel route, and the map information, to the autonomous driving ECU 30.

The power train ECU 50 alters a torque generated by a drive device 51 (e.g., an engine and/or a motor) by controlling the drive device 51 so as to control driving force of the vehicle. The power train ECU 50 can change a shift position of an unillustrated transmission of the vehicle. Therefore, the power train ECU 50 can let the vehicle move forward at a required speed and let the vehicle move backward at a required speed, based on the driving operation of the user or instruction signals sent from the other ECUs.

The brake ECU 60 controls a brake device 61 of the vehicle so as to control a brake force applied to the vehicle. Therefore, the brake ECU 60 can decelerate the vehicle by applying the brake force to the vehicle, based on the driving operation of the user or instruction signals sent from the other ECUs.

The steering EUC 70 controls a steering device 71 by driving an unillustrated steering motor to alter a steering angle of steered wheel of the vehicle. Therefore, the steering ECU 70 can alter a moving/traveling direction of the vehicle, based on the driving operation of the user or instruction signals sent from the other ECUs.

### (Outline of operation)

The autonomous driving of the vehicle is a control to recognize a position of the vehicle based on the signals from the positioning satellites such as the GPS signals, and to let the vehicle travel/move in such a manner the position of the vehicle coincides with the travel route. The position of the vehicle that is obtained based on the signals from the positioning satellites is sometimes away from a true position by some meters or more. Therefore, it is difficult to accurately park the vehicle into the target parking space by the autonomous driving. Whereas, the automatic parking is executed using the feature point information obtained based on the image data, and therefore, the automatic parking can accurately control a moving path of the vehicle. In this manner, a system for performing the autonomous driving and a system for performing the automatic parking are designed as separate/independent systems to each other. Accordingly, the conventional apparatus hands driving of the vehicle over to the user when the vehicle reaches the destination by the autonomous driving, and then, lets the user perform a predetermined operation to start the automatic parking.

To the contrary, the first apparatus makes a suggestion (display) to let the user choose from a "parking the vehicle into the registered parking position (i.e., the registered target parking space) by the automatic parking" or a "switching to manual driving (or manually parking the vehicle)", when the vehicle approaches the registered parking position while the first apparatus is driving the vehicle by the autonomous driving toward the destination which is the same position as the registered parking position. When the user chooses/selects parking the vehicle into the registered parking position (i.e., the registered target parking space) by the automatic parking, the first apparatus makes a transition seamlessly from a state where the autonomous driving is being executed to a state where the automatic parking is executed (without handing over driving the vehicle to the user), and parks the vehicle into the registered target parking space by the automatic parking. Namely, the first apparatus directly switches the driving state of the vehicle from the state where the autonomous driving is being executed to the state where the automatic parking is executed, without handing over driving the vehicle to the user.

### (Specific operation)

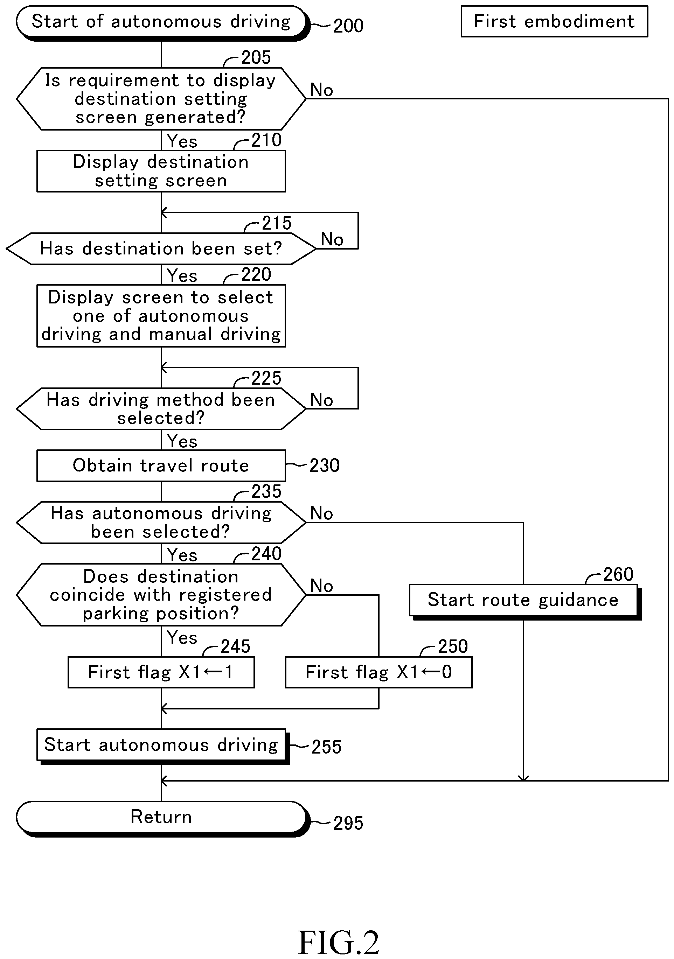

An unillustrated CPU of the autonomous driving ECU 30 executes a routine shown by a flowchart in FIG. 2, every time a predetermined time elapses. When an appropriate time point comes, the CPU starts processing from step 200 in FIG. 2, and proceeds to step 205. At step 205, the CPU determines whether or not a requirement to display a screen for setting the destination on the display 15 is issued/generated. For example, the user of the vehicle operates a button for setting the destination, included in a menu screen displayed on the display 15, the requirement to display the screen for setting the destination on the display 15 is generated.

When the requirement to display the screen for setting the destination on the display 15 is not generated, the CPU makes a "No" determination at step 205, and directly proceeds to step 295 so as to terminate the present routine tentatively.

Whereas, when the requirement to display the screen for setting the destination on the display 15 is generated, the CPU makes a "Yes" determination at step 205, and proceeds to step 210. At step 210, the CPU lets the display 15 display the destination setting screen. Subsequently, the CPU proceeds to step 215 to determine whether or not the destination has been set by the user. The CPU waits until the destination is set. "Waiting" means that the same step is repeatedly executed.

When the destination is set, the CPU makes a "Yes" determination at step 215, and proceeds to step 220. At step 220, the CPU lets the display 15 display the "screen for the user to choose/select one of the autonomous driving and the manual driving". Thereafter, the CPU proceeds to step 225 to determine whether or not either one of the autonomous driving and the manual driving has been chosen/selected. The CPU waits until the user selects one of the autonomous driving and the manual driving.

When either one of the autonomous driving and the manual driving has been chosen, the CPU makes a "Yes" determination at step 225 to proceed to step 230. At step 230, the CPU obtains the "travel route from the current position to the destination" from the navigation ECU 40.

Subsequently, the CPU proceeds to step 235 to determine whether or not the autonomous driving has been chosen on the "screen for the user to choose one of the autonomous driving and the manual driving". When the autonomous driving has been chosen, the CPU proceeds to step 240 from step 235 to determine whether or not the destination coincides with the registered parking position. It should be noted that, at this step, it is determined that the destination coincides with the registered parking position, not only when the destination completely coincides with the registered parking position but also when the destination is a position within a predetermined distance (e.g., several 10 meters) from the registered parking position.

When the destination coincides with the registered parking position, the CPU makes a "Yes" determination at step 240 to proceed to step 245. At step 245, the CPU sets a value of a first flag X1 to "1". Thereafter, the CPU proceeds to step 255.

Whereas, when the destination does not coincide with the registered parking position, the CPU makes a "No" determination at step 240 to proceed to step 250. At step 250, the CPU sets the value of the first flag X1 to "0". Thereafter, the CPU proceeds to step 255. It should be noted that the value of the first flag X1 and values of flags described later are set to "0" through an initialization routine executed by the CPU when a position of an unillustrated start switch (e.g., an ignition key switch, a ready switch, or the like) of the vehicle is changed from an off position to an on position.

The CPU starts the autonomous driving at step 255. As a result, the vehicle is autonomously driven in such a manner that the vehicle travels along the travel route. Thereafter, the CPU proceeds to step 295 to terminate the present routine.

Whereas, if the autonomous driving has not been chosen when the CPU proceeds to step 235, the CPU makes a "No" determination at step 235, and proceeds to step 260. At step 260, the CPU lets the navigation ECU 40 start the route guidance from the current position of the vehicle to the destination. Thereafter, the CPU proceeds to step 295.

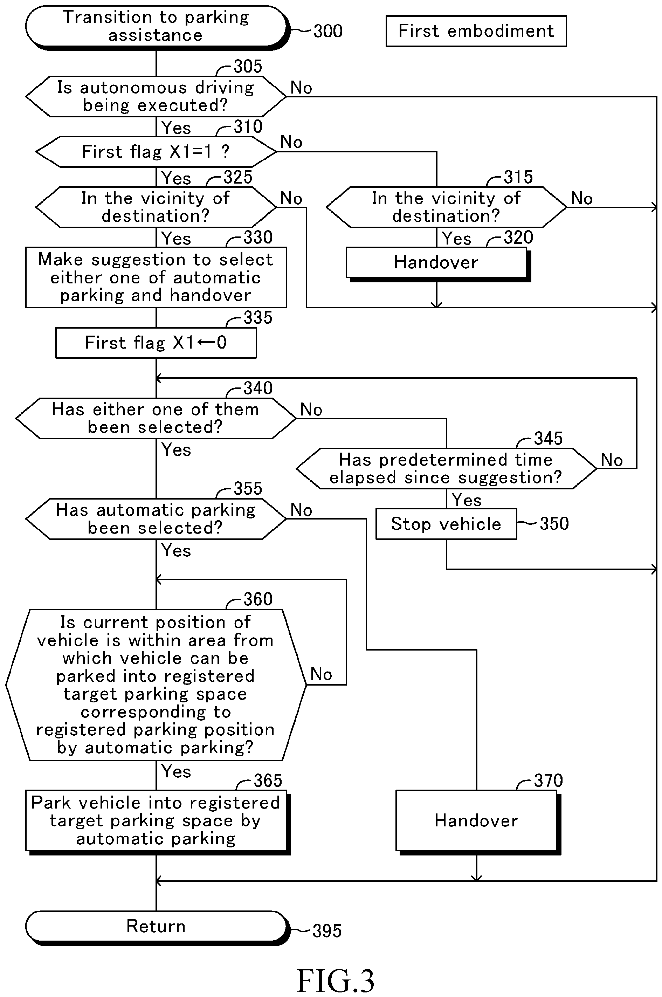

In addition, the CPU executes a routine shown by a flowchart in FIG. 3, every time a predetermined time elapses. When an appropriate time point comes, the CPU starts processing from step 300 in FIG. 3, and proceeds to step 305. At step 305, the CPU determines whether or not the autonomous driving is being executed. When the autonomous driving is not being executed, the CPU makes a "No" determination at step 305, and directly proceeds to step 395 so as to terminate the present routine tentatively.

Whereas, when the autonomous driving is being executed, the CPU makes a "Yes" determination at step 305, and proceeds to step 310. At step 310, the CPU determines whether or not the value of the first flag X1 is "1". The fact that the value of the first flag X1 is "1" means that the destination coincides with the registered parking position (refer to step 240 and step 245 in FIG. 2).

When the value of the first flag X1 is not "1", the CPU makes a "No" determination at step 310, and proceeds to step 315. At step 315, the CPU determines whether or not the current position of the vehicle is in the vicinity of the destination. Specifically, the CPU determines whether or not the current position of the vehicle is a position within a predetermined distance (e.g., several 10 meters) from the destination. When the current position of the vehicle is not in the vicinity of the destination, the CPU makes a "No" determination at step 315, and directly proceeds to step 395 so as to terminate the present routine tentatively.

Whereas, when the current position of the vehicle is in the vicinity of the destination, the CPU makes a "Yes" determination at step 315, and proceeds to step 320. At step 320, the CPU executes a well-known handover process to switch the driving of the vehicle to the manual driving by the user (driver) from the autonomous driving. Thereafter, the CPU proceeds to step 395.

On the other hand, if the value of the first flag X1 is "1", the CPU makes a "Yes" determination at step 310, and proceeds to step 325. At step 325, similarly to step 315, the CPU determines whether or not the current position of the vehicle is in the vicinity of the destination. When the the current position of the vehicle is not in the vicinity of the destination, the CPU makes a "No" determination at step 325, and directly proceeds to step 395 so as to terminate the present routine tentatively.

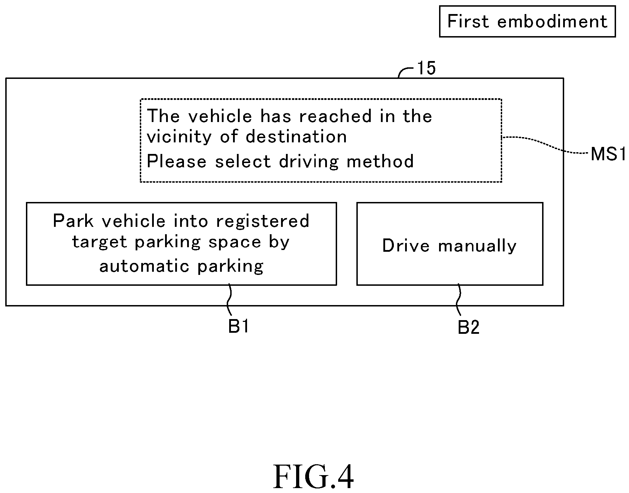

Whereas, when the current position of the vehicle is in the vicinity of the destination, the CPU makes a "Yes" determination at step 325, and proceeds to step 330. At step 330, the CPU lets the display 15 display a screen (shown in FIG. 4) for the user to choose from the automatic parking or the handover (i.e., the CPU makes a suggestion to ask the user which the user wants, the automatic parking or the handover).

The screen shown in FIG. 4 includes a message MS1, and operable (touch operable) touch buttons B1 and B2. The message MS1 is a message that encourages the user (the driver) or makes a suggestion to the user to decide the driving method, since the vehicle has reached the position near the destination. The touch button B1 is a button for the user to select the automatic parking to park the vehicle into the registered target parking space. The touch button B2 is a button for the user to select the manual driving (i.e., handing over driving of the vehicle to the user). The touch button B2 may be a button for the user to select the manual parking of the vehicle.

Subsequently, the CPU proceeds to step 335 to set the value of the first flag X1 to "0".

Next, the CPU proceeds to step 340 to determine whether or not either one of the automatic parking and the handover is selected. Namely, the CPU determines whether or not either one of the touch button B1 and the touch button B2 is operated.

When neither of the automatic parking nor the handover is selected, the CPU proceeds to step 345 from step 340. At step 345, the CPU determines whether or not a predetermined time has elapsed since a time point at which selecting either one of the automatic parking and the handover is suggested (namely, a time point at which the screen shown in FIG. 4 is displayed). When the predetermined time has not elapsed yet, the CPU returns to step 340.

If neither of the automatic parking nor the handover is selected in the period from the time point at which selecting either one of the automatic parking and the handover is suggested to the time point the predetermined time has elapsed, the CPU makes a "Yes" determination at step 345, and proceeds to step 350 to stop the vehicle. Thereafter, the CPU directly proceeds to step 395 so as to terminate the present routine tentatively.

Whereas, when either one of the automatic parking and the handover is selected in the period from the time point at which selecting either one of the automatic parking and the handover is suggested to the time point the predetermined time has elapsed, the CPU makes a "Yes" determination at step 340, and proceeds to step 355.

At step 355, the CPU determines whether or not the automatic parking is selected. When the automatic parking is selected, the CPU makes a "Yes" determination at step 355, and proceeds to step 360. At step 360, the CPU determines whether or not the current position of the vehicle is within an area from which the vehicle can be parked into the registered target parking space corresponding to the registered parking position by the automatic parking.

For example, the CPU obtains feature point information detected at the present time point (hereinafter, referred to as "current feature point information") from the PVM-ECU 10. The CPU compares the current feature point information with the registered feature point information to determine whether or not there is a grouped feature points common to them. When the CPU determines that there is one or more of the grouped feature points that are commonly present in the current feature point information and the registered feature point information, the CPU determines that the current position of the vehicle is within the area from which the vehicle can be parked into the registered target parking space corresponding to the registered parking position by the automatic parking. This is because, when there is one or more of the grouped feature points that are commonly present in the current feature point information and the registered feature point information, the parking assistance ECU 20 can recognize the position of the registered target parking space with respect to the vehicle, and thus, can execute the automatic parking.

When the current position of the vehicle is not within the area from which the vehicle can be parked into the registered target parking space corresponding to the registered parking position by the automatic parking, the CPU waits at step 360.

Thereafter, when the current position of the vehicle enters within the area from which the vehicle can be parked into the registered target parking space corresponding to the registered parking position by the automatic parking, the CPU makes a "Yes" determination at step 360, and proceeds to step 365. At step 365, the CPU parks the vehicle into the registered target parking space by the automatic parking. Namely, the CPU transmits the instruction signal to the parking assistance ECU 20 to let the CPU of the parking assistance ECU 20 perform the above-described "parking assistance control after the registration of the registered parking position (i.e., automatic parking into the registered target parking space)". Thereafter, the CPU proceeds to step 395.

If the handover is selected instead of the automatic parking when the CPU proceeds to step 355, the CPU makes a "No" determination at step 355, and proceeds to step 370. At step 370, the CPU executes the handover process so as to switch the driving of the vehicle from the autonomous driving to the manual driving by the user (driver). Thereafter, the CPU proceeds to step 395.

As has been described, while the first apparatus is autonomously driving the vehicle to the destination which is the same as the registered parking position (i.e., registered position), it makes a transition seamlessly from the state where the autonomous driving is being executed to the state where the automatic parking is executed without intervening a period in which the vehicle is manually driven (i.e., without the handover). Accordingly, the user can easily park the vehicle into the registered target parking space by starting the autonomous driving at the start point. In addition, the user can change the driving state of the vehicle from the state where the vehicle is traveling by the autonomous driving to the state where the vehicle is traveling by the automatic parking, and can change the driving state of the vehicle from the state where the vehicle is traveling by the autonomous driving to the state where the vehicle is traveling by the manual driving, according to his/her desire.

### <Modified example of the first embodiment>

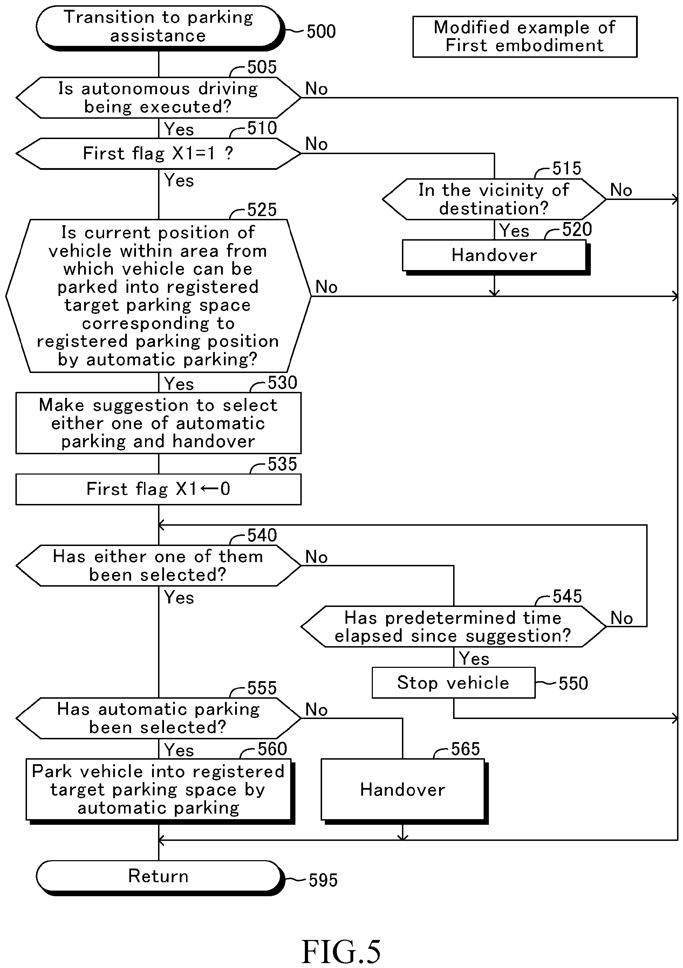

The modified example of the "first apparatus according to the first embodiment" is different from the first apparatus only in that it makes the suggestion to ask the user which the user wants, the automatic parking or the handover, when the vehicle reaches the area from which the vehicle can be parked into the registered target parking space by the automatic parking. Specifically, the CPU of the modified example is different from the CPU of the first apparatus only in that it executes a routine shown by a flowchart in FIG. 5 in place of FIG. 3, every time a predetermined time elapses.

When an appropriate time point comes, the CPU of the autonomous driving ECU 30 of the modified example starts processing from step 500 in FIG. 5, and proceeds to step 505. At step 505, the CPU determines whether or not the autonomous driving is being executed at the present time point. When the autonomous driving is not being executed at the present time point, the CPU makes a "No" determination at step 505, and directly proceeds to step 595 so as to terminate the present routine tentatively.

Whereas, when the autonomous driving is being executed at the present time point, the CPU makes a "Yes" determination at step 505, and proceeds to step 510. At step 510, the CPU determines whether or not the value of the first flag is "1".

When the value of the first flag is not "1", the CPU makes a "No" determination at step 510, and proceeds to step 515. At step 515, the CPU determines whether or not the current position of the vehicle is in the vicinity of the destination. When the current position of the vehicle is not in the vicinity of the destination, the CPU makes a "No" determination at step 515, and directly proceeds to step 595 so as to terminate the present routine tentatively.

Whereas, when the current position of the vehicle is in the vicinity of the destination, the CPU makes a "Yes" determination at step 515, and proceeds to step 520. At step 520, the CPU executes the well-known handover process to switch the driving of the vehicle to the manual driving by the user (driver) from the autonomous driving. Thereafter, the CPU proceeds to step 595.

On the other hand, if the value of the first flag is "1" when the CPU proceeds to step 510, the CPU makes a "Yes" determination at step 510, and proceeds to step 525. At step 525, similarly to step 360 shown in FIG. 3, the CPU determines whether or not the current position of the vehicle is in the area from which the vehicle can be parked into the registered target parking space corresponding to the registered parking position by the automatic parking.

When the current position of the vehicle is not in the area from which the vehicle can be parked into the registered target parking space by the automatic parking, the CPU makes a "No" determination at step 525, and directly proceeds to step 595 so as to terminate the present routine tentatively.

Whereas, when the current position of the vehicle is in the area from which the vehicle can be parked into the registered target parking space by the automatic parking, the CPU makes a "Yes" determination at step 525, and proceeds to step 530. At step 530, the CPU lets the display 15 display the screen (shown in FIG. 4) for the user to choose from the automatic parking or the handover (i.e., the CPU makes a suggestion to ask the user which the user wants, the automatic parking or the handover).

Subsequently, the CPU proceeds to step 535 to set the value of the first flag X1 to "0".

Next, the CPU proceeds to step 540 to determine whether or not either one of the automatic parking and the handover is selected.

When neither of the automatic parking nor the handover is selected, the CPU proceeds to step 545 from step 540. At step 545, the CPU determines whether or not a predetermined time has elapsed since a time point at which selecting either one of the automatic parking and the handover is suggested. When the predetermined time has not elapsed yet, the CPU returns to step 540.

If neither of the automatic parking nor the handover is selected in a period from the time point at which selecting either one of the automatic parking and the handover is suggested to a time point the predetermined time has elapsed, the CPU makes a "Yes" determination at step 545, and proceeds to step 550 to stop the vehicle. Thereafter, the CPU directly proceeds to step 595 so as to terminate the present routine tentatively.

Whereas, when either one of the automatic parking and the handover is selected in the period from the time point at which selecting either one of the automatic parking and the handover is suggested to the time point the predetermined time has elapsed, the CPU makes a "Yes" determination at step 540, and proceeds to step 555.

At step 555, the CPU determines whether or not the automatic parking is selected. When the automatic parking is selected, the CPU makes a "Yes" determination at step 555, and proceeds to step 560. At step 560, the CPU parks the vehicle into the registered target parking space by the automatic parking. Thereafter, the CPU proceeds to step 595.

If the handover is selected instead of the automatic parking when the CPU proceeds to step 555, the CPU makes a "No" determination at step 555, and proceeds to step 565. At step 565, the CPU executes the well-known handover process so as to switch the driving of the vehicle from the autonomous driving to the manual driving by the user (driver). Thereafter, the CPU proceeds to step 595.

### 2. Second embodiment

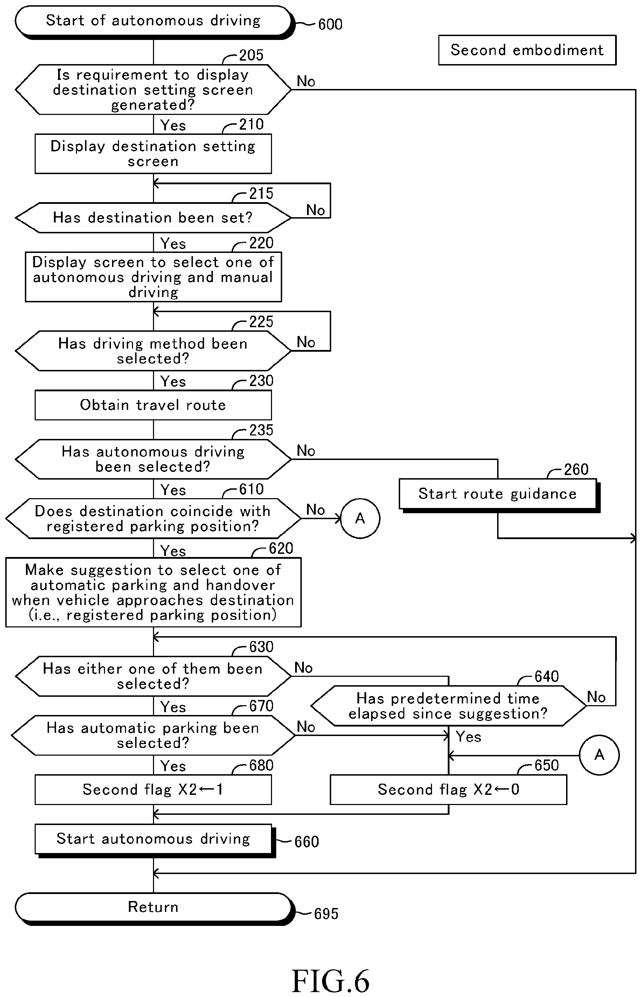

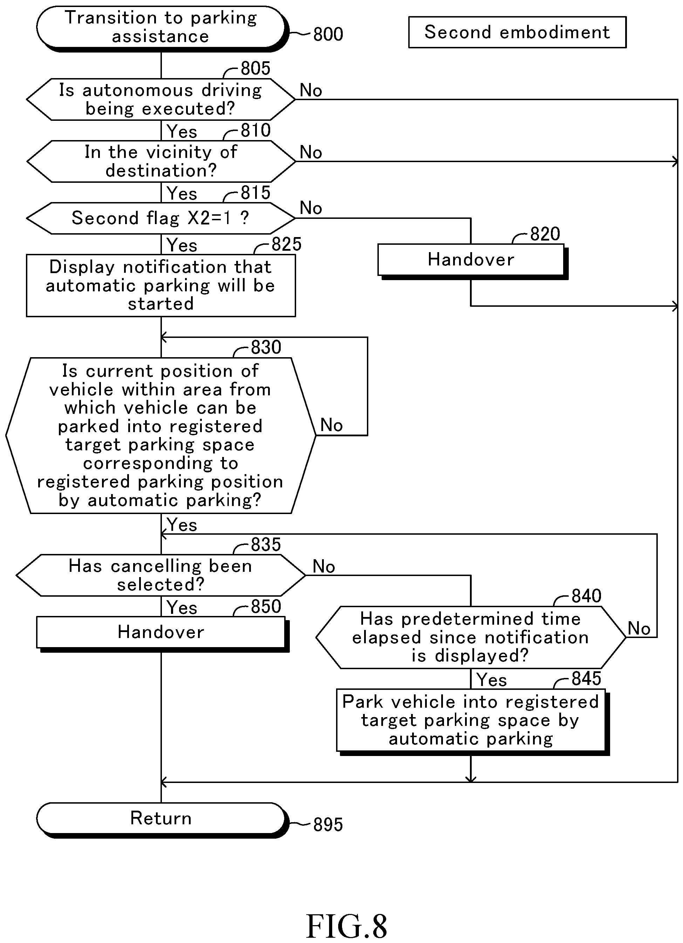

A vehicle control apparatus (hereinafter, referred to as a "second apparatus") according to a second embodiment of the present disclosure is different from the first apparatus only in that the CPU of the autonomous driving ECU 30 executes a routine shown by a flowchart in FIG. 6 in place of FIG. 2 every time a predetermined time elapses., and a routine shown by a flowchart in FIG. 8 in place of FIG. 3 every time a predetermined time elapses.

### (Outline of operation)

At a time point at which the user decides to let the vehicle move to the destination which is the same as the registered parking position by the autonomous driving, the second apparatus makes a suggestion in advance to let the user select either one of parking the vehicle into the registered parking position (the registered target parking space) by the automatic parking and switching to the manual driving (or parking the vehicle manually), when the vehicle approaches the registered parking position. Namely, the second apparatus lets the user decide and select the parking method when the vehicle is at the start point.

In a case where the user selects parking the vehicle into the registered parking position by the automatic parking, the second apparatus notifies the user of the vehicle that the vehicle will be parked into the registered parking position by the automatic parking, when the vehicle approaches the registered parking position. Unless the user cancels the automatic parking when that notification is made, the second apparatus makes a transition seamlessly from a state where the autonomous driving is being executed to a state where the automatic parking is executed (without handing over driving the vehicle to the user), and parks the vehicle into the registered target parking space by the automatic parking. Namely, similarly to the first apparatus, the second apparatus directly switches the driving state of the vehicle from the state where the autonomous driving is being executed to the state where the automatic parking is executed, without handing over driving the vehicle to the user.

### (Specific operation)

The CPU of the autonomous driving ECU 30 of the second apparatus executes the routine shown by the flowchart in FIG. 6, every time the predetermined time elapses. Steps from step 205 to step 235 shown in FIG. 6 are the same as the steps from step 205 to step 235 shown in FIG. 2, respectively. Therefore, when the manual driving is selected after the destination is set, the CPU proceeds to step 260 from step 235 to start the route guidance.

Whereas, when the autonomous driving is selected after the destination is set, the CPU makes a "Yes" determination at step 235, and proceeds to step 610. At step 610, the CPU determines whether or not the destination coincides with the registered parking position. At step 610, the same process as step 240 shown in FIG. 2 is performed. Therefore, it is determined that the destination coincides with the registered parking position, not only when the destination completely coincides with the registered parking position but also when the destination is a position within a predetermined distance (e.g., several 10 meters) from the registered parking position.

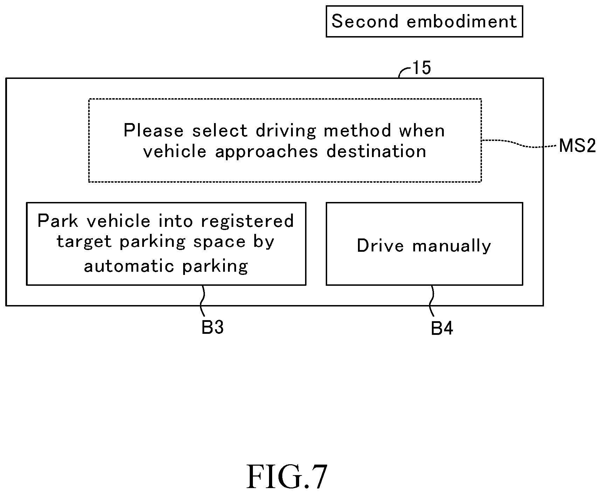

When the destination coincides with the registered parking position, the CPU makes a "Yes" determination at step 610 to proceed to step 620. At step 620, the CPU lets the display 15 display the screen (shown in FIG. 7) for the user to choose/select from the automatic parking or the handover (i.e., the CPU makes a suggestion to ask the user which the user wants, the automatic parking or the handover), when the vehicle approaches the destination (i.e., the registered parking position).

As shown in FIG. 7, this screen includes a message MS2, and operable (touch operable) touch buttons B3 and B4. The message MS2 is a message that encourages the user (the driver) to decide the driving method that the user desires when the vehicle reaches a position in the vicinity of the destination. The touch button B3 is a button for the user to select the automatic parking to park the vehicle into the registered target parking space. The touch button B4 is a button for the user to select the manual driving (i.e., handing over the driving to the user). The touch button B4 may be a button for the user to select the manual parking of the vehicle.

Subsequently, the CPU proceeds to step 630 shown in FIG. 6 to determine whether or not either one of the automatic parking or and the handover is selected. Namely, the CPU determines whether or not either one of the touch button B3 and the touch button B4 is operated.

When neither of the automatic parking nor the handover is selected, the CPU proceeds to step 640 from step 630. At step 640, the CPU determines whether or not a predetermined time has elapsed since a time point at which selecting either one of the automatic parking or the handover is suggested (namely, a time point at which the screen shown in FIG. 7 is displayed). When the predetermined time has not elapsed yet, the CPU returns to step 630.

If neither of the automatic parking nor the handover is selected in a period from the time point at which selecting either one of the automatic parking or the handover is suggested to the time point the predetermined time has elapsed, the CPU makes a "Yes" determination at step 640, and proceeds to step 650 to set a value of a second flag X2 to "0". Thereafter, the CPU proceeds to step 660 to start the autonomous driving, and proceeds to step 695 so as to terminate the present routine tentatively. It should be noted that, in this case, the CPU may proceed to step 680 described later in place of step 650 from step 640 to set the value of the second flag X2 to "1", and then, may proceed to step 660.

Whereas, when either one of the automatic parking and the handover is selected in the period from the time point at which selecting either one of the automatic parking and the handover is suggested to the time point the predetermined time has elapsed, the CPU makes a "Yes" determination at step 630, and proceeds to step 670.

At step 670, the CPU determines whether or not the automatic parking is selected. When the automatic parking is selected, the CPU makes a "Yes" determination at step 670, and proceeds to step 680. At step 680, the CPU sets the value of the second flag X2 to "1". Thereafter, the CPU proceeds to step 660 to start the autonomous driving, and proceeds to step 695 so as to terminate the present routine tentatively.

To the contrary, when the handover is selected instead of the automatic parking, the CPU makes a "No" determination at step 670, and proceeds to step 650. At step 650, the CPU sets the value of the second flag X2 to "0". Thereafter, the CPU proceeds to step 660 to start the autonomous driving, and proceeds to step 695 so as to terminate the present routine tentatively.

Note that, when the CPU proceeds to step 610 and the destination does not coincide with the registered parking position, the CPU makes a "No" determination at step 610, and proceeds to step 650. At step 650, the CPU sets the value of the second flag X2 to "0". Thereafter, the CPU proceeds to step 660 to start the autonomous driving, and proceeds to step 695 so as to terminate the present routine tentatively.

Furthermore, the CPU of the autonomous driving ECU 30 of the second apparatus executes the routine shown by the flowchart in FIG. 8, every time the predetermined time elapses. When an appropriate time point comes, the CPU of the autonomous driving ECU 30 of the modified example starts processing from step 800 in FIG. 8, and proceeds to step 805. At step 805, the CPU determines whether or not the autonomous driving is being executed at the present time point. When the autonomous driving is not being executed at the present time point, the CPU makes a "No" determination at step 805, and directly proceeds to step 895 so as to terminate the present routine tentatively.

Whereas, when the autonomous driving is being executed at the present time point, the CPU makes a "Yes" determination at step 805, and proceeds to step 810. At step 810, similarly to step 315, the CPU determines whether or not the current position of the vehicle is in the vicinity of the destination. When the current position of the vehicle is not in the vicinity of the destination, the CPU makes a "No" determination at step 810, and directly proceeds to step 895 so as to terminate the present routine tentatively.

Whereas, when the current position of the vehicle is in the vicinity of the destination, the CPU makes a "Yes" determination at step 810, and proceeds to step 815. At step 815, the CPU determines whether or not the value of the second flag X2 is "1".

The fact that the value of the second flag X2 is "1" means that the user desires to park the vehicle into the registered target parking space by the automatic parking (refer to the Yes determination at step 670 shown in FIG. 6, and step 680 shown in FIG. 6). Whereas, the fact that the value of the second flag X2 is "0" means that the user desires to switch the driving of the vehicle to the manual driving instead of the automatic parking (refer to the No determination at step 670 shown in FIG. 6, and step 650 shown in FIG. 6).

When the value of the second flag X2 is not "1", the CPU makes a "No" determination at step 815, and proceeds to step 820. At step 820, the CPU executes a well-known handover process to switch the driving of the vehicle to the manual driving by the user (driver) from the autonomous driving. Thereafter, the CPU proceeds to step 895.

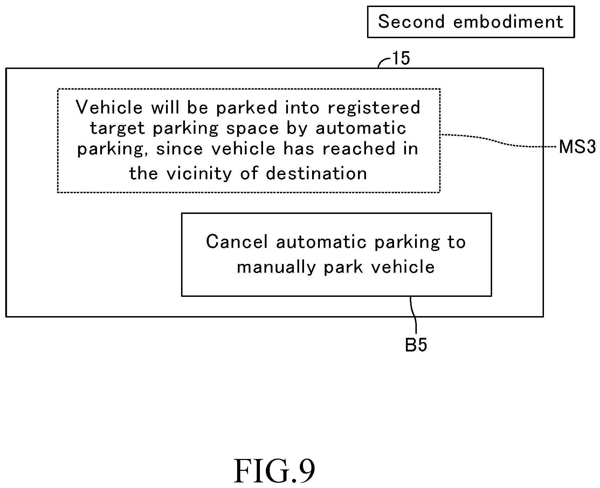

Whereas, if the value of the second flag X2 is "1" when the CPU proceeds to step 815, the CPU makes a "Yes" determination at step 815, and proceeds to step 825. At step 825, the CPU lets the display 15 display a screen (shown in FIG. 9) to notify the user that the vehicle will be parked into the registered target parking space by the automatic parking, and makes a suggestion to the user as to whether the user desires to cancel the automatic parking to park the vehicle by manual driving.

As shown in FIG. 9, this screen includes a message MS3, and an operable touch button B5. The message MS3 is a message that notifies the user that the vehicle will be parked into the registered target parking space by the automatic parking, since the vehicle has reached a position in the vicinity of the destination. The touch button B5 is a button for the user to cancel the automatic parking and to select the manual parking to park the vehicle into the registered target parking space (i.e., a button to select the handover).

Subsequently, the CPU proceeds to step 830 to determine whether or not the current position of the vehicle is within the area from which the vehicle can be parked into the registered target parking space corresponding to the registered parking position by the automatic parking. The process of this step is the same as that of step 360 described above.

When the current position of the vehicle is not within the area from which the vehicle can be parked into the registered target parking space by the automatic parking, the CPU waits at step 830.

Whereas, when the current position of the vehicle is within the area from which the vehicle can be parked into the registered target parking space by the automatic parking, the CPU makes a "Yes" determination at step 830, and proceeds to step 835. At step 835, the CPU determines whether or not cancelling the automatic parking has been selected by the operation onto the touch button B5 (i.e., whether or not the manual driving has been selected).

When cancelling the automatic parking has not been selected, the CPU proceeds to step 840 from step 835 to determine whether or not a predetermined time has elapsed since a start time point of the notification to notify the user that the automatic parking is going to be started (i.e., a time point at which the screen shown in FIG. 9 starts to be displayed). When the predetermined time has not elapsed, the CPU returns to step 835.

If cancelling the automatic parking is selected (i.e., the touch button B5 is operated) in a period from a start time point of the notification to notify the user that the automatic parking is going to be started to a time point the predetermined time has elapsed, the CPU makes a "Yes" determination at step 835, and proceeds to step 850. At step 850, the CPU executes a well-known handover process to switch the driving of the vehicle to the manual driving by the user (driver) from the autonomous driving. Thereafter, the CPU proceeds to step 895 so as to terminate the present routine tentatively.

Whereas, if cancelling the automatic parking is not selected in a period from the start time point of the notification to notify the user that the automatic parking is going to be started to the time point the predetermined time has elapsed, it can be assumed that the user still desires to park the vehicle by the automatic parking. Thus, in this case, the CPU makes a "Yes" determination at step 840, and proceeds to step 845. At step 845, the CPU parks the vehicle into the registered target parking space by the automatic parking. Namely, the CPU transmits the instruction signal to the parking assistance ECU 20 to let the CPU of the parking assistance ECU 20 perform the above-described "parking assistance control after the registration of the registered parking position (i.e., automatic parking into the registered target parking space)". Thereafter, the CPU proceeds to step 895.

As has been described, the second apparatus lets the user select the parking method when (or before) the autonomous driving starts. As a result, the user does not have to operate to select the parking method while the autonomous driving is being executed. Therefore, the user can easily move the vehicle to the destination and park the vehicle into the registered target parking space.

### <Modified example of the second embodiment>

At step 810, similarly to step 360, the CPU of a modified example of the second apparatus determines whether or not the current position of the vehicle is in the area from which the vehicle can be parked into the registered target parking space corresponding to the registered parking position by the automatic parking.

In this case, step 830 is omitted. Namely, the CPU directly proceeds to step 835 from step 825.

### 3. Third embodiment

A vehicle control apparatus (hereinafter, referred to as a "third apparatus") according to a third embodiment of the present disclosure is different from the first apparatus only in that it automatically transfers the driving of the vehicle from the autonomous driving to the automatic parking without making a suggestion to ask which the user desires, the automatic parking or the handover, when the current position of the vehicle has reached the position in the vicinity of the destination which is the same as the registered parking position.

### (Specific operation)

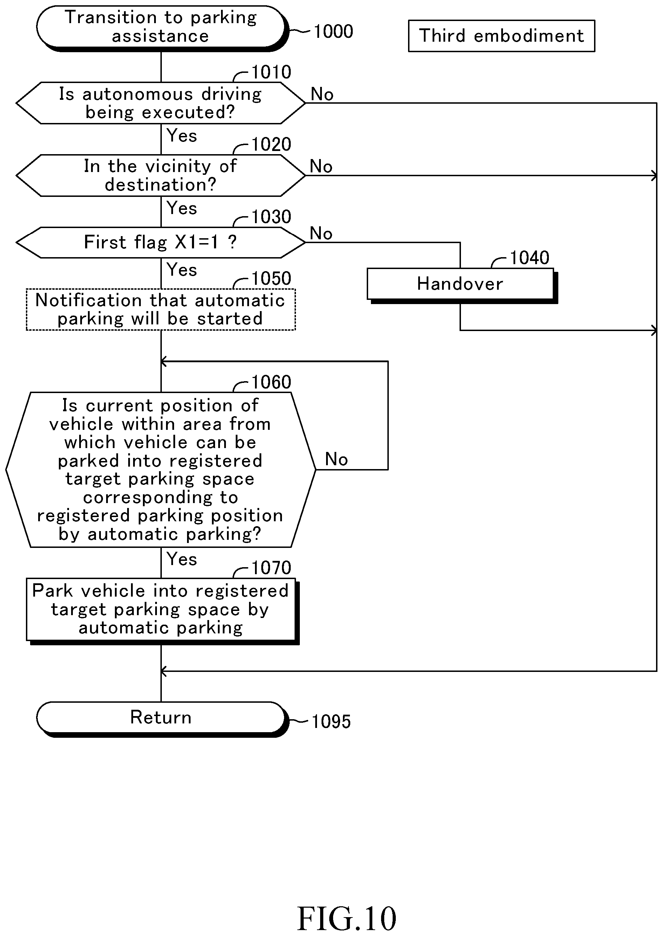

The CPU of the autonomous driving ECU 30 of the third apparatus is different from the CPU of the first apparatus only in that it executes a routine shown by a flowchart in FIG. 10 in place of FIG. 3, every time a predetermined time elapses. The CPU executes the routine shown in FIG. 2, which has already been described. Hereinafter, the operation of the third apparatus based on the routine shown in FIG. 10 will be described.

When an appropriate time point comes, the CPU starts processing from step 1000 in FIG. 10, and proceeds to step 1010. At step 1010, the CPU determines whether or not the autonomous driving is being executed. When the autonomous driving is not being executed, the CPU makes a "No" determination at step 1010, and directly proceeds to step 1095 so as to terminate the present routine tentatively.

Whereas, when the autonomous driving is being executed, the CPU makes a "Yes" determination at step 1010, and proceeds to step 1020. At step 1020, similarly to step 315, the CPU determines whether or not the current position of the vehicle is in the vicinity of the destination. When the current position of the vehicle is not in the vicinity of the destination, the CPU makes a "No" determination at step 1020, and directly proceeds to step 1095 so as to terminate the present routine tentatively.

Whereas, when the current position of the vehicle is in the vicinity of the destination, the CPU makes a "Yes" determination at step 1020, and proceeds to step 1030. At step 1030, the CPU determines whether or not the value of the first flag X1 is "1". The fact that the value of the first flag X1 is "1" means that the destination coincides with the registered parking position (refer to step 240 and step 245, in FIG. 2).

When the value of the first flag X1 is not "1", the CPU makes a "No" determination at step 1030, and proceeds to step 1040. At step 1040, the CPU executes a well-known handover process to switch the driving of the vehicle to the manual driving by the user (driver) from the autonomous driving. Thereafter, the CPU directly proceeds to step 1095 so as to terminate the present routine tentatively.

Whereas, when the value of the first flag X1 is "1", the CPU makes a "Yes" determination at step 1030, and proceeds to step 1050. At step 1050, the CPU lets the display 15 display a notification that the automatic parking is going to be executed. Thereafter, the CPU proceeds to step 1060. It should be noted that step 1050 may be omitted. In this case, the CPU proceeds to step 1060 from step 1030, when the CPU makes a "Yes" determination at step 1030.

At step 1060, similarly to step 360, the CPU determines whether or not the current position of the vehicle is within the area from which the vehicle can be parked into the registered target parking space corresponding to the registered parking position by the automatic parking.

When the current position of the vehicle is not within the area from which the vehicle can be parked into the registered target parking space by the automatic parking, the CPU waits at step 1060.

Thereafter, when the vehicle enters into the area from which the vehicle can be parked into the registered target parking space by the automatic parking, the CPU makes a "Yes" determination at step 1060, and proceeds to step 1070. At step 1070, similarly to step 365, the CPU parks the vehicle into the registered target parking space by the automatic parking. Then, the CPU proceeds to step 1095.

As has been described, while the third apparatus is autonomously driving the vehicle to the destination which is the same as the registered parking position (i.e., registered position), it makes a transition seamlessly (i.e., without the handover) from a state where the autonomous driving is being executed to a state where the automatic parking is executed. Accordingly, the user can automatically park the vehicle into the registered target parking space only by starting the autonomous driving at the start point.

It should be noted that the present disclosure is not limited to the above-described embodiments and its modifications, and may adopt various modified examples within the scope of the present disclosure. For example, as described above, the parking assistance ECU 20 may perform, as the automatic parking to the registered target parking space, a control to:
specify a relationship, based on the registered feature point information and the actual feature point information, between a current position of the vehicle and a position of the registered target parking space, when the vehicle enters into the area from which the vehicle can be parked into the registered target parking space by the automatic parking;
newly calculate a parking path to move the vehicle to the position of the registered target parking space, utilizing the specified relationship;
and park the vehicle into the registered target parking space by moving the vehicle along the parking path.

## Claims

1. A vehicle control apparatus comprising a controller (20, 30) configured to be capable of:
performing an automatic parking to move and park a vehicle into a registered target parking space corresponding to a registered parking position that has been registered in advance from a position in the vicinity of said registered target parking space; and
performing an autonomous driving to autonomously move said vehicle to a destination,
wherein,
said controller is configured to, when said destination coincides with said registered parking position, directly switch a driving state of said vehicle to a state where said automatic parking is executed from a state where said autonomous driving is being executed without handing over said driving state of said vehicle to a user of said vehicle, to park said vehicle into said registered target parking space by said automatic parking.

2. The vehicle control apparatus according to claim 1,
wherein,
said controller (20, 30) is configured to, when said vehicle has moved, by said autonomous driving, to an area from which said vehicle can be moved and parked into said registered target parking space by said automatic parking, switch said driving state of said vehicle to said state where said automatic parking is executed from said state where said autonomous driving is being executed.

3. The vehicle control apparatus according to any one of claims 1 or 2,
wherein,
said controller (20, 30) is configured to:
let said user select either one of parking said vehicle into said registered target parking space by said automatic parking and handing over said driving state of said vehicle to said user, after said vehicle has reached a predetermined area determined based on said registered parking position by said autonomous driving in a case where said destination coincides with said registered parking position;
directly switch said driving state of said vehicle to said state where said automatic parking is executed from said state where said autonomous driving is being executed, when parking said vehicle into said registered target parking space by said automatic parking is selected; and
switch said driving state of said vehicle to a state where said vehicle is manually operated by said user from said state where said autonomous driving is being executed, when handing over said driving state of said vehicle to said user is selected.

4. The vehicle control apparatus according to claim 3,
wherein,
said controller (20, 30) is configured to set an area within a predetermined distance from said registered parking position, as said predetermined area determined based on said registered parking position.

5. The vehicle control apparatus according to claim 3,
wherein,
said controller (20, 30) is configured to set an area from which said vehicle can be moved and parked into said registered target parking space by said automatic parking, as said predetermined area determined based on said registered parking position.

6. The vehicle control apparatus according to claim 1,
wherein,
said controller (20, 30) is configured to:
when said destination is set by said user,
determine whether or not said destination coincides with said registered parking position, and let said user select in advance either one of parking said vehicle into said registered target parking space by said automatic parking and handing over said driving state of said vehicle to said user when it is determined that said destination coincides with said registered parking position;
after said vehicle has reached a predetermined area determined based on said registered parking position by said autonomous driving;
directly switch said driving state of said vehicle to said state where said automatic parking is executed from said state where said autonomous driving is being executed, when parking said vehicle into said registered target parking space by said automatic parking has been selected; and
switch said driving state of said vehicle to a state where said vehicle is manually operated by said user from said state where said autonomous driving is being executed, when handing over said driving state of said vehicle to said user has been selected.

7. The vehicle control apparatus according to claim 6,
wherein,
said controller (20, 30) is configured to make a notification to said user that said driving state of said vehicle is going to be changed to said state where said automatic parking is executed, before said driving state of said vehicle is directly switched to said state where said automatic parking is executed from said state where said autonomous driving is being executed.

8. The vehicle control apparatus according to claim 7,
wherein,
said controller (20, 30) is configured to;
when making said notification, make a suggestion to ask whether or not said user wants said driving state of said vehicle to be handed over to said user instead of parking said vehicle into said registered target parking space; and
when said user wants said driving state of said vehicle to be handed over to said user, switch said driving state of said vehicle to said state where said vehicle is manually operated by said user from said state where said autonomous driving is being executed.

9. The vehicle control apparatus according to any one of claims 7 or 8,
wherein,
said controller (20, 30) is configured to make said notification, when said vehicle has reached said predetermined area.

10. The vehicle control apparatus according to claim 9,
wherein,
said controller (20, 30) is configured to set an area within a predetermined distance from said registered parking position, as said predetermined area.

11. The vehicle control apparatus according to claim 9,
wherein,
said controller is (20, 30) configured to set an area from which said vehicle can be moved and parked into said registered target parking space by said automatic parking, as said predetermined area.

12. A vehicle control method comprising:
a step of performing an autonomous driving to autonomously move a vehicle to a destination,
a step of performing an automatic parking to move and park said vehicle into a registered target parking space corresponding to a registered parking position that has been registered in advance from a position in the vicinity of said registered target parking space; and
a step of directly switching a driving state of said vehicle to a state where said automatic parking is executed from a state where said autonomous driving is being executed without handing over said driving state of said vehicle to a user of said vehicle, when said destination coincides with a position that is the same as said registered parking position.

13. A non-transitory storage medium storing a program, said program causing a computer (20, 30) to implement:
a step of performing an autonomous driving to autonomously move a vehicle to a destination,
a step of performing an automatic parking to move and park said vehicle into a registered target parking space corresponding to a registered parking position that has been registered in advance from a position in the vicinity of said registered target parking space; and
a step of directly switching a driving state of said vehicle to a state where said automatic parking is executed from a state where said autonomous driving is being executed without handing over said driving state of said vehicle to a user of said vehicle, when said destination coincides with a position that is the same as said registered parking position.
